# EUROPEAN PATENT SPECIFICATION

(11) **EP 0 876 412 B1**
(45) Date of publication and mention of the grant of the patent: **27.04.2005**
(21) Application number: 97904745.3
(22) Date of filing: 13.01.1997
(51) Int. Cl.: C09J 133/06, C09J 125/02, C09J 131/02, C09J 133/02, C09J 133/18, C09J 133/24, C09J 7/02, C08F 220/18

(54) **WATER-BORNE ACRYLIC EMULSION PRESSURE-SENSITIVE ADHESIVE COMPOSITIONS CONTAINING MULTIFUNCTIONAL MONOMER HAVING IMPROVED STABILITY AND REMOVABILITY**
HAFTKLEBEZUSAMMENSETZUNGEN, DIE EIN MULITFUNKTIONELLES MONOMER ENTHALTEN, AUF DER BASIS WÄSSRIGER ACRYLEMULSIONEN MIT VERBESSERTER STABILITÄT UND ENTFERNBARKEIT
COMPOSITIONS ADHESIVES AUTOCOLLANTES, EN EMULSION ACRYLIQUE A BASE AQUEUSE, CONTENANT UN MONOMERE MULTIFONCTIONNEL A STABILITE ET CAPACITE DE DECOLLEMENT AMELIOREES

(30) Priority: 22.01.1996 US 589133
(43) Date of publication of application: 11.11.1998
(73) Proprietor: ASHLAND INC., Columbus, OH 43216 (US)
(72) Inventor: SKOGLUND, Michael, J., Dublin, OH 43017 (US)
(74) Representative: VOSSIUS & PARTNER
(86) International application number: PCT/US1997/000351
(87) International publication number: WO 1997/027231

(56) References cited:
- US-A- 4 151 147
- US-A- 4 590 068
- US-A- 4 665 142
- US-A- 4 925 908
- US-A- 5 006 617
- US-A- 5 292 835

## Description

Removeable adhesives are used on signs, temporary consumer labels, stickers, inventory tracking labels and energy labels for appliances.

Removable pressure-sensitive adhesive application requirements dictate that the adhesive exhibit sufficient peel force and tack to anchor to the desired substrate but also remain cleanly and readily removable even after extended periods of time. Any significant increase in bond strength, as measured by peel force, over time is undesirable in these applications.

Acrylic pressure sensitive adhesives prepared from homopolymers or copolymers of low glass transition temperature (Tg), such as n-butyl acrylate and 2 - ethylhexyl acrylate, exhibit sufficient tack for pressure sensitive adhesive applications, but typically develop significant increases in bond strength to substrates over time.

Bond strength is determined by the affinity of the pressure sensitive adhesive for the substrate, the initial tack of the adhesive, and the internal cohesive strength of the adhesive polymer film. The molecular weight of the adhesive polymer has a profound effect on adhesive properties. The peel force developed by a pressure sensitive adhesive develops a maximum cohesive failure mode value as the molecular weight of the polymer is increased. As the molecular weight is further increased, the failure mode becomes adhesive and the peel force decreases with increasing molecular weight. This adhesion phenomenon can be explained in terms of adhesive polymer cohesive strength and the surface wetting of the substrate by the adhesive polymer as described in *H. Warson, The Application of Synthetic Resin Emulsions,* Chapter 6 Adhesives, Ernest Benn Limited, London, 1972 and D. Satas, *Handbook of Pressure-Sensitive Adhesive Technology,* Chapter 13 Acrylic Adhesives, Van Nostrand Reinhold Co., 1982.

Removable pressure sensitive adhesives require that the cohesion of the adhesive be greater than the adhesion to the substrate. Adhesives with high cohesive strength can be prepared with controlled crosslinking during the polymerization process, by a controlled secondary intrapolymer reaction, or by hydrogen bonding. An example of the controlled crosslinking method is the use of a polyglycol dimethacrylate ( e.g. tetraethyleneglycol dimethacrylate) (*H. Warson, The Application of Synthetic Resin Emulsions,* pages 286, 305, and 306, Adhesives, Ernest Benn Limited, London, 1972.)

U. S. Patent 3,492,260 ( Samor & Satas, Kendell) discloses the use of crosslinking monomers in the preparation of acrylic emulsion pressure sensitive adhesives. The preferred crosslinking monomer is polyethylene glycol dimethacrylate. Polyethylene glycol dimethacrylate was incorporated into the polymer at the level of 4.1 parts. The molecular weight of the polyethylene glycol acrylate is not disclosed. The uncured gel content is reported to be only 41 percent.

U. S. Patent 3,836,512 ( Chu, Union Carbide) describes the optional use of up to 2 mole percent crosslinking monomer, including di(meth)acrylates, in the homogeneous copolymerization of water soluble and water insoluble olefinically unsaturated monomers in the presence of a dispersing agent, redox catalyst system, a liquid hydrocarbon, emulsifier, and electrolyte. Compositions containing only 16 to 50 mole percent water insoluble olefinically unsaturated monomer ( i.e. acrylate esters ) are described. Alkali swellable polymer gels were obtained.

U. S. patent 3,971,766 ( Ono et al., Teijin Ltd.) describes an acrylic pressure sensitive adhesive containing 0.002 to 0.05 mole percent of a polyfunctional monomer, (i.e. polyethylene glycol dimethacrylate). The '766 patent states " If the amount of the polyfunctional compound is more than 0.05 mol%, gellation occurs at the time of polymerization, and the resulting copolymer cannot be applied to a base sheet as an adhesive." The solvent based polymerizations contain up to 0.3 parts by weight polyethylene glycol dimethacrylate.

U. S. Patent 3,998,997 ( Mowdood et al., Goodyear) describes an acrylic emulsion pressure sensitive adhesive polymer prepared with di, tri, or tetra functional vinyl monomers including polyethylene glycol dimethacrylate, tetra ethylene glycol diacrylate, 1,6 hexanediol diacrylate, diethylene glycol diacrylate, trimethylol propane triacrylate, triethylene glycol diacrylate, triethylene glycol dimethacrylate, pentaerythritol tetra acrylate, pentaerythritol tetra methacrylate, dimethyl amino ethyl diacrylate, dimethyl amino ethyl dimethacrylate, and 1,3 butane glycol dimethacrylate at levels up to 0.3 parts. Example 11 is an acrylic emulsion pressure sensitive polymer preparation containing 0.04 parts ethylene glycol dimethacrylate.

U. S. Patent 4,151,147 ( Chris et al., Celanese ) describes a process for preparing an all acrylic copolymer latex where the polymerization is promoted by the use of a multifunctional acrylate monomer at the level of 0.1 to 1.0 %, and preferably at 0.5% of the weight of the total comonomer charge. The examples show trimethylol triacrylate at 0.5 percent.

The limitation on the use of multifunctional acrylate monomers to obtain cross linked acrylic polymer adhesive in a stable emulsion form was summarized by Warson. " In some cases a limited amount of a polyfunctional monomer, such as ethylene glycol dimethacrylate, may be included. The effect of the this difunctional monomer is limited since if more than a few percent are included with the other acrylic monomers, the emulsion will precipitate during the polymerization reaction, whilst the addition of a molecular weight controller, of which dodecyl mercaptan is an example, will mitigate against the usefulness of the multi-functional monomer. " ( H. Warson, *Crosslinkable Vinyl and Acrylic Polymer Latices in Adhesive Applications - A Review,* European Adhesives and Sealants, December 1982).

U. S. Patent 4,507,429 ( Lenny, Air Products) describes a pressure sensitive adhesive composition of an acrylate and/or vinyl ester, an olefinically unsaturated carboxylic acid monomer, and a polyolefinically unsaturated copolymerizable monomer. This polyfunctional monomer can be a polyvinyl or polyallylic monomer used in a small proportion, in general from about 0.1 to 0.4 weight percent.

U. S. Patent 4,513,118 ( Sutterlin et al.) describes the copolymerization of di, tri, and tetra methacrylates at levels of 0.2 to 3.0 percent by weight in the second stage of a three stage process for producing thermoplastic impact modifiers.

Additional limitations on the use of multifuntional acrylate monomers have been reported. "Other observations indicate that a small amount of polyethylene[glycol] dimethacrylate is an effective cross-linker in the presence of acrylic or methacrylic acid, but not alone. The use of a larger quantity of the cross-linking monomer resulted in a gel in the case of a solution polymer or a grainy adhesive in the case of an emulsion polymer. Generally, only a few percent of a difunctional cross-linking agent can be used, as a larger amount causes the precipitation of latex particles. " ( D. Satas, *Handbook of Pressure-Sensitive Adhesive Technology,* 2nd Edition, page 418, Van Nostrand Reinhold Co., 1989).

U. S. Patent 4,735,990 ( Kihara et al., Nitto Electric) discloses emulsion polymers prepared with an fluoroalkyl esters of acrylic acid, an acrylic acid derivative, and a polyfunctional monomer for internal cross linking. Emulsion polymerizations where conducted under dilute conditions affording solid content of about 20 to 25 weight percent. 1 to 10 percent by weight polyfunctional monomer is used for internal crosslinking the fluoroalkyl acrylic ester emulsion polymers. Copolymerization of triethylene glycol dimethacrylate at 3.7 weight percent of the polymer is exemplified.

Marumoto and Suzuta ( *Polymer* , 19, 867-871, 1978 ) describes the preparation of a methylmethacrylate emulsion polymer at 16 weight percent solids containing 3 weight percent on monomer ethylene glycol dimethacrylate.

U. S. Patent 4,829,139 ( Mudge, National Starch) describes the preparation of permanently tacky pressure sensitive adhesive terpolymers made from vinyl esters, ethylene, and maleate or fumarates. The method of preparation uses 0 to 3 % by weight of butanediol diacrylate.

E. P. 391,343 ( Shah et al., Goodrich) describes an acrylic emulsion polymer with a number average particle size of 600 Angstroms or less, a Tg of 20° C or less, containing 2 to 6 weight percent olefinically unsaturated carboxylic acid monomer and 0.05 to 10 weight percent diacrylate or dimethacrylate ester of an aliphatic diol. The preferred amount of di(meth)acrylate is 0.1 to 1.0 weight percent.

An example of the preparation of a stable acrylic emulsion pressure sensitive adhesive polymer containing limited amounts ( i.e. up to one percent) is described in U. S. Patent 4,925,908 (Bernard et al, Avery). The '908 patent says multifunctional acrylate monomers can be used to control gel content of the polymer adhesive. The '908 patent also says "the amount of multifunctional acrylate monomer should not exceed about one percent as such amounts tend to reduce the stability of the acrylic-based emulsion from which the polymers are prepared, resulting in coagulation of the emulsion particles during preparation".

The '908 patent stabilization system is a protective colloid (VINOL 540 high molecular weight polyvinyl alcohol 87 to 89% hydrolyzed ) used at 0.5 to 1.0%, a TRITON X-200 anionic emulsifier sodium octoxynol-2-ethane sulfonate used at 1.8 to 2.1%, and a TRITON N-111, Nonoxynol-11 nonionic emulsifier used at 0.5 to 2.0%. The patent says that when the anionic emulsifier is less than 1.5 % the emulsion loses stability and when the nonionic emulsifier is less than 0.5% the emulsion loses stability. The '908 patent says the polyvinyl alcohol must be greater than 0.5 % since " compositions having less than 0.5 percent by weight of the protective colloid are not preferred because such compositions tend to exhibit too great of an adhesion buildup on some substrates".

It has now been found that stable high solids water-borne acrylic emulsion pressure sensitive adhesive polymers of low coagulum can be prepared with multifunctional monomers well above the 1.0 weight percent of the polymer. Surprisingly, these low coagulum, stable emulsion polymers can be prepared with no protective colloid, no nonionic emulsifier and less than 1.5% anionic emulsifier.

These removable adhesive compositions have the advantage of not requiring a protective colloid polyvinyl alcohol to prevent increase in peel force on various substrates. Advantageously, the low level of emulsifier also affords improvements in foam reduction during web coating operations, makes the coated adhesive film less sensitive to humidity and substantially reduces surfactant residues or " ghosting "remaining on the substrate after the adhesive is removed.

This invention departs from the '908 patent, in that over 1.0 weight percent multifunctional monomer is incorporated into the emulsion polymer adhesive and the polymer is stable and very low in polymer coagulum, has a gel content above 90 percent, exhibits excellent anchorage to a variety of substrates, exhibits excellent removability without the use of a protective colloid, and is a stable emulsion without the use of a nonionic emulsifier with less than 1.5 % anionic emulsifier. In a preferred embodiment of the invention the gel content is 92Y and the number average particle diameter is larger than 100 nanometers.

Water-bome acrylic emulsion polymers, that excel at removable pressure sensitive adhesive applications, are composed of an acrylic copolymer with a Tg of less than 0° C and are prepared with greater than one part per hundred, on total monomer content, of a monomer containing multiple and reactive olefinic moieties and less than 1.5% of an anionic surfactant. The polymer gel content is greater than 90 weight percent and a polymerized polymer solids content of 40 to 60 weight percent is obtained. A glass transition temperature of the acrylic copolymer of -70°C to less than 0°C is preferred, a calculated Tg of less than - 40° C is more preferred, a calculated Tg of -70°C to -50°C is still more preferred, and a calculated Tg of less than - 60° C is most preferred. The copolymer is the polymerization product of 50 to 99 parts of at least one alkyl acrylate monomer having from one to twelve carbon atoms in the alkyl chain, more than one weight percent multifunctional monomer and less than 1.5% of an anionic surfactant.

Among useful monofunctional acrylate monomers in the practice of this invention are n-butyl acrylate, iso-butyl acrylate, n-hexyl acrylate, n-octyl acrylate, 2-ethylhexyl acrylate, n-decyl acrylate, iso-decyl acrylate and n-lauryl acrylates. The preferred monofunctional alkyl acrylate is 2-ethylhexyl acrylate.

The multifunctional monomer is a cross linking monomer selected from a group of multifunctional monomers including diacrylates ( ethylene glycol diacrylate, propylene glycol diacrylate ), dimethacrylates ( ethylene glycol dimethacrylate, diethylene glycol dimethacrylate, and 1,3-butane glycol dimethacrylate ), trimethacrylates ( pentaerythritol trimethacrylate and trimethylolpropane trimethacrylate ), divinyl benzene, or monomers with multiple olefinic unsaturations that are reactive under the conditions of free radical emulsion polymerization. 1,3-Butanediol dimethacrylate is the preferred multifunctional monomer because the monomer has allowance under 21 CFR 175.105.

The aqueous acrylic emulsion polymers of this invention can also include the polymerization product of an alkyl ester of acrylic acid olefinically multifunctional monomer less than 1.5% anionic surfactant in optional admixture with other polymerizable monomers from the group of alkyl esters of methacrylic acid, styrene, vinyl and vinylene halides, allyl esters of unsaturated monocarboxylic acids, vinyl esters, vinyl ethers, hydroxyl containing alkyl esters of acrylic and methacrylic acid, dialkyl esters of monoethylenically unsaturated dicarboxylic acids, ethylenically unsaturated monocarboxylic and polycarboxylic acids and the anhydrides, nitriles, unsubstituted and substituted ( including N-substituted ) amides of all the said acids.

The emulsion polymer of this invention may be prepared with an optional amount of a polar monomer such as hydroxyl containing alkyl esters of acrylic and methacrylic acid. Polar monomers include acrylic acid, methacrylic acid, itaconic acid, maleic acid, hydroxy ethyl acrylate, hydroxy ethyl methacrylate, hydroxy propyl acrylate, acrylonitrile, and substituted acrylamides. The emulsion polymer may be prepared in the absence of a polar monomer. The preferred polar monomer is acrylamide.

The emulsion polymer is prepared in the presence of an anionic surfactant, (D. C. Blackley, *Emulsion Polymerization Theory and Practice*, Applied Science Publishers LTD London, 1975 ). The emulsion polymer is preferably prepared in the essential absence of a protective colloid, such as polyvinyl alcohol or hydroxyethyl cellulose, and is prepared with less than 1.5 weight percent on monomer of anionic surfactant. Surfactants are listed in the Gower "Handbook of Industrial Surfactants". The preferred surfactant type is an alkylated benzene sulfonate. The preferred surfactant is sodium dodecylbenzene sulfonate.

The aforementioned polymer emulsions can be prepared free of coagulum, reactor fouling, and are stable for extended periods of time. Combined with common wetting agents, anti-foams, and rheology modifiers, these acrylic emulsion polymers are shear stable, and thus can be mechanically coated on films, papers, and fabrics by rod, roll, knife, and slot methods ( D. Satas, *Handbook of Pressure-Sensitive Adhesive Technology,* 2nd Edition, Chapter 34 , Van Nostrand Reinhold Co., 1989). Additionally, these emulsion polymers are excellent film formers, affording clear and uniform pressure sensitive adhesive films that are devoid of defects and discontinuities.

In the following examples all units are in the metric system unless otherwise noted. All references mentioned herein are expressly incorporated by reference.

### EXAMPLES

### EXAMPLE 1

An acrylic emulsion polymer pressure sensitive adhesive was prepared wth the following monomer emulsion containing 5 weight percent multifunctional monomer of the total monomer weight and 4 mole percent multifunctional monomer of the total moles of monomer.

| **REACTOR CHARGE** | **pphm** | **grams** |
|---|---|---|
| Deionized Water | 35.0 | 525.0 |
| Monomer Emulsion (3%) | | 66.3 |

| **MONOMER EMULSION** | **pphm** | **grams** |
|---|---|---|
| Deionized Water | 43.0 | 720.0 |
| Sodium Bicarbonate | 0.25 | 3.8 |
| Sodium Dodecylbenzene Sulfonate | 1.0 | 15.0 |
| 2-Ethythexyl Acrylate | 94.0 | 1410.0 |
| Acrylamide, 50% Aqueous | 2.0 | 30.0 |
| 1,3-Butanediol Dimethacrylate | 5.0 | 75 |

| **BISULFITE SOLUTION** | | |
|---|---|---|
| Deionized Water | 5.0 | 75.0 |
| Sodium Bisulfite | 0.06 | 0.9 |

| **PERSULFATE SOLUTION** | | |
|---|---|---|
| Deionized Water | 4.9 | 72.9 |
| Sodium Persulfate | 0.2 | 3.0 |

| **HYDROPEROXIDE SOLUTION** | | |
|---|---|---|
| Deionized Water | | 10.0 |
| Tert-Butyl Hydroperoxide, 70% | | 1.5 |
| Aqueous | | |

| **SULFOXYLATE SOLUTION** | | |
|---|---|---|
| Deionized Water | | 10.0 |
| Sodium Formaldehyde Sulfoxylate | | 1.5 |

| **RINSE WATER** | | |
|---|---|---|
| Deionized Water | | 80.0 |

| **BIOSTAT** | | |
|---|---|---|
| KATHON LX 1.5% | | 3.0 |

| **COMPOUNDING** | **pph** | |
|---|---|---|
| Emulsion Polymer C5729-99 | 100.0 | |
| SURFYNOL SE | 3.0 | |
| PLURONIC L-101 Premix | 2.0 | |
| COLLOIDS 646 | 0.4 | |
| POLACRYL BR-1 00 Premix | 0.3 | |

Deionized water had a conductivity of 1.0 µS or less.

RHODACAL DS-10 Sodium Dodecylbenzene Sulfonate is supplied as a flake by Rhone-Poulenc.

MHOROMER MFM-407 1,3-Butanediol Dimethacrylate is monomer supplied by Rohm Tech Inc.

PLURONIC L-101 nonionic ethylene oxide propylene oxide block polymer wetting agent supplied by BASF Corporation. A premix was prepared with one part deionized water, one part isopropanol, and 2 parts PLURONIC L-101.

SURFYNOL SE wetting agent supplied by Air Products.

POLYACRYL BR-100 associative thickener supplied by POLACRYL Inc. A premix was prepared with one part deionized water, one part mono-butyl glycol ether, and 2 parts POLYACRYL BR-100.

COLLOIDS 646 defoamer supplied by Rhone-Poutenc.

A jacketed PYREX reactor equipped with nitrogen purge, stirrer, and addition ports was charged with deionized water which was heated to 74° C. The monomer emulsion ingredients where combined for a reactor feed. The reactor was charged with 3% of the monomer emulsion and 5% of the bisulfite and 5% persulfate solutions. After the initial exotherm subsided the remainder of the monomer emulsion, bisulfite solution, and persulfate solution were fed at a constant and continuous rate over a three hour period with a reaction temperature of 78° C. The resulting emulsion polymer was held at 80° C for one hour, the hydroperoxide and sulfoxylate solutions were added seperately then the latex was cooled to 30° C. Biostat was added.

This emulsion polymer was labeled C5729-99 and had a nonvolatile content of 51.2 wt %, pH of 7.6, Brookfield RV viscosity of 40 cps at 50 rpm, consecutively filtered coagulum of 41 ppm on 100 mesh filter, 145 ppm on 200 mesh filter, and 152 ppm on 325 mesh filter. The average particle size was determined by a Coulter N-4 to be 500 nm. The total gel content was 91.6 weight percent. Since the emulsion polymer was prepared with 1.0 weight percent sodium dodecylbenzene sulfonate, the gel content of the polymer is estimated to be 92.5 weight percent. The emulsion polymer was compounded mixing the listed compounding ingredients to afford a coater ready pressure sensitive adhesive labeled C5729-103. The adhesive was coated on to POLY SLIK 8024 release liner at a coating weight of 17.8 ± 2.5 µm (0.7 ± 0.1 mils) dry thickness and laminated to a primed 27 kg (60 lb) paper face stock.

### EXAMPLE 2

U.S. patent 4,925,908 example number one was prepared.

| | **'908 Example 1 grams** | **pphm** | **Example 2 grams** |
|---|---|---|---|
| **REACTOR CHARGE** | | | |
| Deionized Water | 90.0 | 22.50 | 337.5 |
| Tetrasodium Pyrophosphate | 1.2 | 0.300 | 4.5 |
| AEROSOL MA-80 | 0.1 | 0.025 | 0.4 |
| Monomer Emulsion | 29.0 | 7.250 | 108.8 |

| **MONOMER EMULSION** | | | |
|---|---|---|---|
| Deionized Water | 130.0 | 32.5 | 487.5 |
| TRITON X-200 | 30.0 | 7.5 | 112.5 |
| TRITON N-111 | 6.0 | 1.5 | 112.5 |
| 2-Ethylhexyl Acrylate | 240.0 | 60.0 | 900.0 |
| Butyl Acrylate | 152.0 | 38.0 | 570.0 |
| Methacrylic Acid | 8.0 | 2.0 | 30.0 |
| Dioctyl Azelate | 8.0 | 2.0 | 30.0 |
| 1,6-Hexanediol Diacrylate | 0.8 | 0.2 | 3.0 |
| t-Butyl Hydroperoxide | 0.4 | 0.1 | 1.5 |

| **INITIATOR SOLUTION A** | | | |
|---|---|---|---|
| Deionized Water | 6.0 | 1.5 | 22.5 |
| Potassium Persulfate | 0.2 | 0.05 | 0.8 |
| Ferric Sodium Edetate | 0.03 | 0.008 | 0.11 |

| **INITIATOR SOLUTION B** | | | |
|---|---|---|---|
| Deionized Water | 80.0 | 20.0 | 300.0 |
| Sodium Formaldehyde | 0.40 | 0.10 | 1.5 |
| Sulfoxylate | | | |

| **PVA SOLUTION** | | | |
|---|---|---|---|
| AIRVOL 540, 10% Aqueous | 30.0 | 7.5 | 112.5 |
| Initiator Solution B | 32.0 | 8.0 | 120.0 |

| **BICARBONATE SOLUTION** | | | |
|---|---|---|---|
| Deionized Water | 12.0 | 3.0 | 45.0 |
| Sodium Bicarbonate | 1.0 | 0.25 | 3.7 |
| AIRVOL 540 is a partially hydrolyzed polyvinyl alcohol supplied by Air Products and Chemicals Inc. A 10 % aqueous solution was prepared in accordance with *VINOL® Polyvinyl Alcohol Dissolving Techniques,* Air Products and Chemical, Inc. Bulletin 152-511, 1982, 1985 | | | |

A jacketed PYREX reactor equipped with nitrogen purge, stirrer, and addition ports was charged with deionized water, tetrasodium pyrophosphate, and AEROSOL MA-80 and heated to 40° C. The monomer emulsion ingredients where combined for a reactor feed. The reactor was charged with 5 % of the monomer emulsion and heated to 40° C. Initiator solution A was added. After two minutes, 2 % of initiator solution B was added.

An exotherm was observed to last eight minutes with a peak temperature of 50° C. The reactor jacket was maintained at 40° C during the following delayed feeds. After the initial exotherm subsided the remainder of the monomer emulsion was added a rate of 5.6 g/min and initiator solution B was added at a rate of 1.80 g/min. After 10 mins the monomer emulsion feed rate was increased to 11.3 g/min or a 5 hour delayed addition time. After 60% of the monomer emulsion was added, and after three hours, the PVA solution was mixed with the remainder of initiator solution B to afford initiator solution C. Initiator solution C was added at a rate of 3.75 g/min. Simultaneously, the bicarbonate solution was added at a rate of 3.75 g/min. Agitation was increased to maintain mixing as viscosity increased. Dilution water, 325 grams, was added during the last hour of delayed feeds to maintain surface movement. At the end of delayed feeds, the reaction temperature was raised to 60°C and held for 0.5 hours. The resulting emulsion polymer was cooled to 30° C and discharged to afford 3307 grams.

This emulsion polymer was labeled C5777-11 and a nonvolatile content of 46.8 wt %, pH of 6.5, Brookfield RV viscosity of 3100 cps at 200 rpm, consecutively filtered coagulum of 21 ppm on 100 mesh filter, 35 ppm on 200 mesh filter, and 40 ppm on 325 mesh filter. The average particle size was determined by a Coulter N-4 to be 660 nm.

The U.S. 4,925,908 example 1, example 3 here, pressure sensitive adhesive was coated on to POLY SLIK 8024 release liner at a coating weight of 17.8 ± 2.5 µm (0.7 ± 0.1 mils) dry thickness and laminated to a primed 27 kg (60 lb) paper face stock. The 2.54 cm (one inch) wide strips of the of the example 1 and 2 adhesive lamination were applied to a variety of substrates at 22°C (72° F) and 70°C (158° F) and evaluated according to PSTC-2 90° peel force measurement in pounds (1 pound corresponds to 0.453 kg) after a specific dwell period. The following is a summary of the results.

### Dwell Time: 20 mins

### Dwell Temperature: 22°C (72° F)

| **SUBSTRATE** | **EXAMPLE 1** | **EXAMPLE 2 U.S. 4,925,908 EXAMPLE 1** |
|---|---|---|
| Stainless Steel | 0.4 | 0.9 |
| Aluminum | 0.1 | 0.7 |
| Enamel | 0.3 | 1.0 |
| Glass | 0.2 | 0.7 |
| SMC | 0.2 | 1.0 |
| HDPE | 0.4 | 0.5 |
| Polypropylene | 0.3 | 0.7 |
| Polystyrene | 0.5 | 0.9 |
| Polycarbonate | 0.1 | 1.2 |
| Polymethylmethacrylate | 0.1 | 1.2 |
| Polyvinyl Chloride | 0.4 | 1.0 |
| ABS | 0.1 | 0.9 |
| Formica | 0.1 | 0.6 |
| 60 lb Gloss Krome Coat | 0.5 D | 0.8 PT |
| Envelope | 0.1 | 0.4 |
| Manila | 0.1 | 0.5 |
| Recycled Box Board | 0.1 | 0.4 |
| Calandered Vinyl | 0.1 | 0.9 PT |
| Polyethylene coated Paper | 0.1 | 0.3 |

### Dwell Time: One Week

### Dwell Temperature 22°C: (72°C F)

| **SUBSTRATE** | **EXAMPLE 1** | **EXAMPLE 2 U.S. 4,925,908 EXAMPLE 1** |
|---|---|---|
| Stainless Steel | 0.7 D | 1.0 |
| Aluminum | 0.2 | 0.9 |
| Enamel | 0.4 | 1.0 |
| Glass | 0.7 | 0.9 |
| SMC | 0.3 | 1.2 |
| HDPE | 0.5 | 0.7 |
| Polypropylene | 0.6 | 0.7 |
| Polystyrene | 0.6 D | 1.0 |
| Polycarbonate | 0.1 | 1.0 |
| Polymethylmethacrylate | < 0.1 | 1.0 PT |
| Polyvinyl Chloride | 0.2 | 0.8 PT |
| ABS | 0.2 | 0.6 PT |
| Formica | 0.3 | 0.7 |
| 60 lb Gloss Krome Coat | 0.7 D | 0.5 PT |
| Envelope | 0.4 | 0.5 |
| Manila | 0.4 D | 0.7 |
| Recycled Box Board | < 0.1 | 0.5 |
| Calandered Vinyl | 0.2 | 0.8 D |
| Polyethylene coated Paper | 0.1 | 0.3 |

### Dwell Time: One Week:

### Dwell Temperature: 50°C (122° F)

| **SUBSTRATE** | **EXAMPLE 1** | **EXAMPLE 2 U.S. 4,925,908 EXAMPLE 1** |
|---|---|---|
| Stainless Steel | 0.6 | 0.9 |
| Aluminum | 0.4 | 1.0 |
| Enamel | 0.7 | 0.7 PT |
| Glass | 0.7 D | 0.9 |
| SMC | 0.3 | PT |
| HDPE | 0.4 | 0.7 |
| Polypropylene | 0.6 | 1.0 |
| Polystyrene | 0.7 D | 0.7 PT |
| Polycarbonate | 0.2 | 0.8 PT |
| Polymethylmethacrylate | 0.2 | 0.4 PT |
| Polyvinyl Chloride | 0.4 | 0.2 PT |
| ABS | 0.6 | 1.1 PT |
| Formica | 0.2 | 0.8 |
| 60lb Gloss Krome Coat | 0.6 PT | 0.5 PT |
| Envelope | 0.3 | 0.9 |
| Manila | 0.4 | 0.9 |
| Recycled Box Board | 0.1 | 0.6 |
| Calandered Vinyl | 0.1 | 0.6 PT |
| Polyethylene coated Paper | 0.2 | 0.8 |

All adhesive peels are clean from the substrate unless otherwise noted.
PT = Paper Tear
D = Delamination
F = Fell Off

This comparison demonstrates that the adhesive of this invention possesses excellent utility as a removable adhesive compared to U.S. Patent 4,925,908. The invention provides a transfer coatable water-borne emulsion pressure sensitive adhesive that remains easily removable from a wide array of substrates. The adhesive film possesses sufficient tack to anchor, but will not build excessive bond to the substrate. This allows for easy, clean removabiltiy. These advantageous properties are obtained by the use of greater then one weight or mole percent on monomer of a multifunctional crosslinking monomer.

## Claims

1. An emulsion composition useful in removable pressure sensitive adhesives and having a gel content greater than 90% comprising the polymerization product of
a) 50 to 99 parts of at least one alkyl monoacrylate monomer having one to twelve carbon atoms in the alkyl chain, and
b) greater than 1 part per hundred based on total monomer content of a multifunctional monomer, and c) less than 1.5% of an anionic surfactant;
wherein the polymerization product has a Tg of less than 0°C.

2. The composition of Claim 1 wherein said alkyl monoacrylate monomer is n-octyl acrylate, isoctyl acrylate or 2-ethylhexyl acrylate.

3. The composition of Claim 1 wherein said monomer containing more than 1 reactive olefinic moiety is 1,3-butanediol dimethacrylate.

4. The composition of Claim 1 wherein said alkyl monoacrylate monomer has 4 to 8 carbon atoms in the alkyl chain.

5. The composition of Claim 1 wherein the polymerization product has a glass transition temperature of -70°C to less than 0°C.

6. The composition of Claim 1 wherein the polymerization product has a glass transition temperature of -70°C to -50°C.

7. The composition of Claim 1 having 40 to 60 weight percent polymer solids content.

8. The composition of Claim 1 having a 92% gel content and a number average particle diameter larger than 100 nanometers.

9. The composition of Claim 1, further comprising, a polar monomer.

10. The composition of Claim 9, wherein the polar monomer is acrylamide.

11. The composition of Claim 1, wherein the anionic surfactant is an alkylated benzene sulfonate.

## Patentansprüche

1. Emulsionszusammensetzung, welche fiir entfembare Haftklebstoffe nützlich ist und einen Gelgehalt von mehr als 90% aufweist, umfassend das Polymerisationsprodukt von
a) 50 bis 99 Teilen mindestens eines Alkylmonoacrylatmonomers mit einem bis zwölf Kohlenstoffatomen in der Alkylkette, und
b) mehr als 1 Teil pro Hundert, bezogen auf den Gesamtmonomergehalt, eines multifunktionellen Monomers, und
c) weniger als 1,5% eines anionischen grenzflächenaktiven Mittels;
wobei das Polymerisationsprodukt eine Tg von weniger als 0°C aufweist.

2. Zusammensetzung nach Anspruch 1, wobei das Alkylmonoacrylatmonomer n-Octylacrylat, Isoctylacrylat oder 2-Ethylhexylacrylat ist.

3. Zusammensetzung nach Anspruch 1, wobei das Monomer, welches mehr als 1 reaktive Olefineinheit enthält, 1,3-Butandioldimethacrylat ist.

4. Zusammensetzung nach Anspruch 1, wobei das Alkylmonoacrylatmonomer 4 bis 8 Kohlenstoffatome in der Alkylkette aufweist.

5. Zusammensetzung nach Anspruch 1, wobei das Polymerisationsprodukt eine Glasübergangstemperatur von -70°C bis niedriger als 0°C aufweist.

6. Zusammensetzung nach Anspruch 1, wobei das Polymerisationsprodukt eine Glasübergangstemperatur von -70°C bis -50°C aufweist.

7. Zusammensetzung nach Anspruch 1 mit einem Polymerfeststoffgehalt von 40 bis 60 Gew.-%.

8. Zusammensetzung nach Anspruch 1 mit einem 92%igen Gelgehalt und einem Zahlenmittel des Teilchendurchmessers von größer als 100 Nanometer.

9. Zusammensetzung nach Anspruch 1, ferner umfassend ein polares Monomer.

10. Zusammensetzung nach Anspruch 9, wobei das polare Monomer Acrylamid ist.

11. Zusammensetzung nach Anspruch 1, wobei das anionische grenzflächenaktive Mittel alkyliertes Benzolsulfonat ist.

## Revendications

1. Composition en émulsion utile dans des adhésifs autocollants décollables et ayant une teneur en gel plus grande que 90% comprenant le produit de polymérisation de
a) 50 à 99 parties d'au moins un monomère de monoacrylate d'alkyle ayant un à douze atomes de carbone dans la chaîne alkyle, et
b) plus de 1 partie par cent par rapport à la teneur totale en monomère d'un monomère multifonctionnel, et
c) moins de 1,5% d'un tensioactif anionique ;
dans laquelle le produit de la polymérisation a une Tg de moins de 0°C.

2. Composition selon la revendication 1 dans laquelle ledit monomère de monoacrylate d'alkyle est l'acrylate de n-octyle, l'acrylate d'isooctyle ou l'acrylate de 2-éthylhexyle.

3. Composition selon la revendication 1 dans laquelle ledit monomère contenant plus d'une partie oléfinique réactive est le diméthacrylate de 1,3-butanediol.

4. Composition selon la revendication 1 dans laquelle ledit monomère de monoacrylate d'alkyle a 4 à 8 atomes de carbone dans la chaîne alkyle.

5. Composition selon la revendication 1 dans laquelle le produit de la polymérisation a une température de transition vitreuse de -70°C à moins de 0°C.

6. Composition selon la revendication 1 dans laquelle le produit de la polymérisation a une température de transition vitreuse de -70°C à -50°C.

7. Composition selon la revendication 1 ayant 40 à 60 pour cent en poids de teneur en solides de polymère.

8. Composition selon la revendication 1 ayant une teneur en gel de 92% et un diamètre particulaire moyen en nombre plus grand que 100 nanomètres.

9. Composition selon la revendication 1 comprenant en outre un monomère polaire.

10. Composition selon la revendication 9 dans laquelle le monomère polaire est l'acrylamide.

11. Composition selon la revendication 1 dans laquelle le tensioactif anionique est un benzènesulfonate alkylé.
